(19) Europäisches Patentamt
European Patent Office
Office européen des brevets

(11) **EP 3 098 272 A1**

(12) **EUROPEAN PATENT APPLICATION**
published in accordance with Art. 153(4) EPC

(43) Date of publication:
**30.11.2016 Bulletin 2016/48**

(21) Application number: **15740648.9**

(22) Date of filing: **22.01.2015**

(51) Int Cl.:
**C09D 11/38** $^{(2014.01)}$     **B41J 2/01** $^{(2006.01)}$
**B41M 5/00** $^{(2006.01)}$

(86) International application number:
**PCT/JP2015/051618**

(87) International publication number:
**WO 2015/111644 (30.07.2015 Gazette 2015/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.01.2014 JP 2014010015**

(71) Applicant: **Sakata INX Corp.**
**Osaka-shi, Osaka 550-0002 (JP)**

(72) Inventors:
• **SATO Yoichi**
**Osaka-shi**
**Osaka 550-0002 (JP)**

• **KONISHI Hiroyuki**
**Osaka-shi**
**Osaka 550-0002 (JP)**
• **MORIYASU Kazuki**
**Osaka-shi**
**Osaka 550-0002 (JP)**

(74) Representative: **Grünecker Patent- und Rechtsanwälte**
**PartG mbB**
**Leopoldstraße 4**
**80802 München (DE)**

(54) **INK COMPOSITION FOR AQUEOUS INK JET**

(57)     An object is to provide an aqueous inkjet ink composition demonstrating excellent drying property, rub fastness, discharge stability, and storage stability even when printed on non-absorbent media. Provided is an aqueous inkjet ink composition containing a pigment, alkali-soluble resin, wax emulsion, basic compound, aqueous medium, and surface active agent, which aqueous inkjet ink composition is characterized in that the average grain size of the wax emulsion is 150 to 200 nm, the solid content of the wax emulsion is 0.5 to 4 percent by mass in the aqueous inkjet ink composition, and the surface active agent is acetylene diol surface active agent.

EP 3 098 272 A1

## Description

## Technical Field

The present invention relates to an aqueous inkjet ink composition demonstrating excellent drying property even when printed on coated paper, polyvinyl chloride sheet and other non-absorbent media, while also achieving excellent rub fastness of printed products as well as excellent discharge stability and storage stability.

## Background Art

The inkjet printing/recording method is a printing/recording method whereby ink droplets are directly discharged onto a base material for printing/recording from a very fine nozzle and deposited onto the base material to obtain text and images.

The aqueous inkjet printing method has traditionally been considered not suitable for producing a large quantity of printed products because it uses a scanning-type print head that takes time to print and also because aqueous medium dries slowly.

On the other hand, this method offers benefits such as not requiring the plate-making process unlike under regular printing methods, as well as permitting printing, including electrophotography, using a system of very simple configuration; due to these benefits, the inkjet printing/recording method has mostly been for personal use.

Accordingly, if the aforementioned long printing/drying time and other problems can be resolved, the inkjet printing/recording method will certainly become competitive against other printing methods and prove its worth even for office use, commercial printing, and other industrial applications. For this reason, there have been active efforts of late to study technologies, from the viewpoints of both the printing system and ink, which would achieve high printing speed and allow for use of low-cost printing paper, in order to utilize the inkjet printing method in industrial applications.

In addition, utilization of coated paper, a polyvinyl chloride sheet, and other non-absorbent media as base material for printing is also studied, in addition to inexpensive standard paper, normal offset printing paper, and other uncoated paper, in the field of industrial applications. With such non-absorbent media, aqueous ink does not wet the medium or spread and dry on it easily, and therefore inks of different colors will cause smudges of inks mixed together in case of multi-colored printing, or dots will aggregate to create mottled patterns in solid-fill image areas whose density should be uniform. Also, since the ink does not penetrate through the medium easily, the printed product will have poor resistance and lack rub fastness. Countermeasures are needed to address these problems as they reduce the value of printed products. In addition, the inherent ink performances required by the inkjet recording method, such as storage stability, discharge stability characterized by stable discharging of ink without clogging the nozzle, and flying performance of droplets, must also be provided.

As for aqueous inks to form image on non-absorbent media, Patent Literatures 1 and 2 describe use of water-soluble resins of specific structures to achieve excellent film resistance, and excellent image quality accompanied by high gloss, on polyvinyl chloride sheets. Even if these inks are used, however, drying property on polyvinyl chloride sheets is still poor and there is a tendency for unstable discharge of ink and distorted printing as a result. In addition, insufficient film forming property of water-soluble resin makes it difficult to form ink film that would withstand strong friction.

In Patent Literature 3, it is recognized that printing quality and rub fastness on various types of non-absorbent media would improve when aqueous black ink is used which contains carbon black of specific pH, pigment dispersion agent of acid value, aqueous resin having amine-neutralized acid groups, and specific water-soluble solvent. However, this method presents a problem in that the need to heat the medium from the reverse side might cause the printing quality to change due to temperature exposure or necessitate a complex system configuration.

As explained above, the current reality is that, while utilization of coated paper, polyvinyl chloride sheets, and other non-absorbent media is being studied in connection with the aqueous inkjet printing method, it is difficult to obtain an aqueous inkjet ink composition demonstrating excellent drying property, while also achieving excellent rub fastness of printed products as well as excellent discharge stability and storage stability.

## Background Art Literature

## Patent Literature

Patent Literature 1: Japanese Patent Laid-open No. 2011-026545
Patent Literature 2: Japanese Patent Laid-open No. 2011-094082
Patent Literature 3: Japanese Patent Laid-open No. 2011-074336

## Summary of the Invention

### Problems to Be Solved by the Invention

An object of the present invention is to provide an aqueous inkjet ink composition demonstrating excellent storage stability and discharge stability, while also achieving excellent drying property and rub fastness when printed on non-absorbent media (coated paper, polyvinyl chloride sheets, etc.).

### Means for Solving the Problems

The inventors of the present invention studied in earnest to achieve the aforementioned object and, as a result, invented an aqueous inkjet ink composition as described below:

(1) An aqueous inkjet ink composition containing a pigment, alkali-soluble resin, wax emulsion, basic compound, aqueous medium, and surface active agent, which aqueous inkjet ink composition is characterized in that the average grain size of the wax emulsion is 150 to 200 nm, the solid content of the wax emulsion is 0.5 to 4 percent by mass in the aqueous inkjet ink composition, and the surface active agent is acetylene diol surface active agent.
(2) An aqueous inkjet composition according to (1), wherein the content of the pigment in the aqueous inkjet ink composition is 2 to 6 percent by mass.
(3) An aqueous inkjet composition according to (1) or (2), wherein the wax emulsion is nonionic polyalkylene wax emulsion.
(4) An aqueous inkjet composition according to any one of (1) to (3), wherein the content of the surface active agent in the water-base inkjet ink composition is 0.1 to 5 percent by mass.

### Effects of the Invention

According to the aqueous inkjet ink composition proposed by the present invention, marked effects in terms of good drying property, good rub fastness, good storage stability and good discharge stability can be demonstrated even when the ink composition is printed on coated paper, polyvinyl chloride sheets, and other non-absorbent media.

### Mode for Carrying Out the Invention

In particular, the inventors of the present invention developed a new aqueous inkjet ink composition that contains a specified amount of wax emulsion whose average grain size is 150 to 200 nm and also contains acetylene diol surface active agent.
By using this inkjet ink composition, especially when its wax emulsion has the aforementioned average grain size, firstly good discharge stability can be maintained even when the ink is discharged from a nozzle of fine diameter under the inkjet printing method. On the other hand, the grain size of the wax emulsion is approx. 1.5 to 2 times the average grain size of general pigment contained in inkjet printing ink.
Accordingly, once the inkjet ink composition has landed on the surface of the medium, the acetylene diol surface active agent reduces the surface tension of the ink to promote wetting of the medium surface and increase the surface area of the ink film. As a result, the ink dries easily. Furthermore, as the wax emulsion is hydrophobic, and also because of its grain size, it moves to the top layer of the ink film and demonstrates high rub fastness.
The inventors of the present invention found that the aforementioned object could be achieved by these characteristics and completed the present invention.
The following explains, in specific terms, each of the components of the aqueous inkjet composition proposed by the present invention.

(Pigment)

The pigment may be any of the various inorganic pigments and organic pigments generally used in inkjet recording solutions. To be specific, the inorganic pigments include titanium oxide, iron oxide red, antimony red, cadmium yellow, cobalt blue, ultramarine blue, Prussian blue, carbon black, graphite, and other colored pigments (including white, black, and other achromatic pigments) as well as calcium carbonate, kaolin, clay, barium sulfate, aluminum hydroxide, talc, and other extender pigments. The organic pigments include soluble azo pigments, insoluble azo pigments, azo lake pigments, condensed azo pigments, copper phthalocyanine pigments, condensed polycyclic pigments, etc. Any of the foregoing pigments may be used alone or two or more types may be combined.
Also, for the pigments, the following are specifically preferred as they allow for expression of vivid hues: C. I.

Pigment Red 5, 7, 12, 57:1, 122, 146, 202, 282, and other red pigments; C. I. Pigment Blue 1, 2, 15:3, 15:4, 16, 17, 60, and other blue pigments; C. I. Pigment Violet 19; C. I. Pigment Yellow 12, 13, 14, 17, 74, 83, 93, 128, 139, 151, 154, 155, 180, 185, 213, and other yellow pigments; and C. I. Black 7 (carbon black), etc.

It should be noted that, under the present invention, any self-dispersing pigment constituted by pigment grains to whose surface polar function groups have been introduced through chemical reaction, or coated pigment grains produced by coating pigment with polymer grains, can be used as pigment. It should be noted that if any pigment is used which is not the aforementioned self-dispersion pigment or coated pigment grains, it is better to use the alkali-soluble resin and basic compound described later to make pigment dispersion resin and to have the pigment disperse in aqueous medium.

The content of the aforementioned pigment in the aqueous inkjet ink composition proposed by the present invention is preferably 1 to 10 percent by mass, or more preferably 2 to 6 percent by mass.

(Alkali-soluble Resin)

For the alkali-soluble resin used under the present invention, any copolymerized resin soluble in aqueous medium in the presence of basic compound, which is used to disperse pigments in regular inks and paints, can be utilized.

For such alkali-soluble resin, any copolymer formed with monomers containing carboxyl groups, or preferably further with monomers containing hydrophobic groups for improved adsorption to pigment, or copolymer obtained by reacting these monomers together with other polymerizable monomers as necessary. can be utilized.

The aforementioned monomers having carboxyl group include, for example, acrylic acid, methacrylic acid, crotonic acid, itaconic aid, maleic acid, fumaric acid, 2-carboxy ethyl (meth)acrylate, 2-carboxy propyl (meth)acrylate, maleic acid anhydride, maleic acid monoalkyl ester, citraconic acid, citraconic acid anhydride, citraconic acid monoalkyl ester, and the like.

Additionally, the aforementioned monomers having hydrophobic groups for improved adsorption to pigment include, for example: monomers having long-chain alkyl groups including (meth)arylic acid and other alkyl esters of radical polymerized unsaturated carboxylic acid with 8 or more carbon atoms (such as 2-ethyl hexyl (meth)acrylate, octyl (meth)acrylate, lauryl (meth)acrylate, stearyl (meth)acrylate, 2-hydroxy stearyl (meth)acrylate, etc.), alkyl vinyl ethers with 8 or more carbon atoms (such as dodecyl vinyl ether, etc.), and vinyl esters of fatty acid with 8 or more carbon atoms (such as vinyl 2-ethyl hexanoate, vinyl laurate, vinyl stearate, etc.); monomoers having alicyclic hydrocarbon groups including cyclohexyl (meth)acrylate, etc.; and monomers having aromatic hydrocarbon groups including benzyl meth(acrylate), styrene, $\alpha$-styrene, vinyl toluene, and other styrene monomers, etc.

In addition, the other polymerizable monomers that may be used as necessary include methyl (meth)acrylate, ethyl (meth)acrylate, propyl (meth)acrylate, isopropyl (meth)acrylate, butyl (meth)acrylate, hexyl (meth)acrylate and other (meth)acrylates, as well as hydroxy ethyl (meth)acrylate, acrylic amide, N-methylol acrylic amide, etc.

The alkali-soluble resin obtained by copolymerizing the aforementioned monomers preferably has a glass transition temperature of 10 to 50°C, acid value of 100 to 300 mg KOH/g, and weight-average molecular weight of 10,000 to 50,000 if consideration is given to improving the solubility of the resin in aqueous medium and preventing the water resistance of the printed product from dropping. If the acid value of the alkali-soluble resin is less than 100 mg KOH/g, the solubility of the resin in aqueous medium tends to drop; if the acid value exceeds 300 mg KOH/g, on the other hand, the water resistance of the obtained printed product tends to drop.

In addition, the glass transition temperature of the alkali-soluble resin is preferably 10 to 50°C, or more preferably 20 to 45°C, if the blocking resistance and bending resistance of the printed product are to be improved. If the glass transition temperature of the alkali-soluble resin is less than 10°C, the blocking resistance of the obtained printed product tends to drop; if the glass transition temperature exceeds 50°C, on the other hand, its bending resistance tends to drop.

Furthermore, the weight-average molecular weight of the alkali-soluble resin is preferably 10,000 to 50,000, or more preferably 20,000 to 30,000, if the rub fastness of the printed product is to be improved further while the dispersibility of the pigment is to be improved at the same time.

If the weight-average molecular weight of the alkali-soluble resin is less than 10,000, the dispersion stability of the pigment and rub fastness of the printed product tend to drop; if the weight-average molecular weight exceeds 50,000, on the other hand, the viscosity increases, which is not desirable.

The content of the alkali-soluble resin is preferably 10 to 60 parts by mass, or more preferably 15 to 50 parts by mass, relative to 100 parts by mass of the pigment contained in the aqueous inkjet ink composition. If the content of the alkali-soluble resin is less than the aforementioned range, the dispersibility of the pigment in the aqueous medium tends to drop; if the content exceeds the aforementioned range, on the other hand, the viscosity increases, which is not desirable.

Here, the glass transition temperature, acid value, and weight-average molecular weight of the alkali-soluble resin as mentioned above can be obtained by the methods below.

<Glass Transition Temperature>

The glass transition temperature is a theoretical glass transition temperature obtained by the Wood's equation below:

$$\text{Wood's equation: } 1/Tg = W1/Tg1 + W2/Tg2 + W3/Tg3 + \ldots + Wx/Tgx$$

(In the equation, Tg1 to Tgx represent the glass transition temperatures of the homopolymers of monomers 1, 2, 3...x constituting the alkali-soluble resin, respectively, while W1 to Wx represent the polymerization ratios of monomers 1, 2, 3...x, respectively, and Tg represents a theoretical glass transition temperature. It should be noted, however, that the glass transition temperatures in Wood's equation are absolute temperatures.)

<Acid Value>

The acid value is a theoretical acid value corresponding to the mg amount of potassium hydroxide theoretically needed to neutralize 1 g of the alkali-soluble resin, arithmetically calculated based on the composition of monomers used to synthesize the alkali-soluble resin.

<Weight-average Molecular Weight>

The weight-average molecular weight can be measured according to the gel permeation chromatography (GPC) method. For example, it can be obtained as a weight-average molecular weight in terms of polystyrene by performing chromatography using the Water 2690 GPC system (manufactured by Waters) as well as the PLgel 5μ Mixed-D column (manufactured by Polymer Laboratories).

(Wax Emulsion)

The wax emulsion used under the present invention has an average grain size of 150 to 200 nm, or preferably 160 to 180 nm.
If the average grain size of the wax emulsion is less than 150 nm, the rub fastness drops; if the average grain size exceeds 200 nm, on the other hand, the discharge stability of the aqueous inkjet ink composition drops, which is not desirable.
Also, the type of wax emulsion to be used is preferably nonionic emulsification-modified paraffin wax emulsion, or more preferably nonionic polyalkylene wax emulsion.
Specific examples of such wax emulsion include AQUACER 531 (mixed type, average grain size 160 nm, manufactured by BYK Japan).
The average grain size of the wax emulsion as mentioned above is a value measured according to the dynamic light scattering method using a Microtrac UPA grain-size distribution analyzer manufactured by Nikkiso.
With the aqueous inkjet ink composition proposed by the present invention, the solid content of the wax emulsion is preferably 0.1 to 10 percent by mass, or more preferably 0.5 to 5 percent by mass, in the inkjet ink composition.
If the solid content of the wax emulsion is less than 0.1 percent by mass, the rub fastness tends to drop; if the solid content exceeds 10 percent by mass, on the other hand, the discharge stability of the aqueous inkjet ink composition drops, which is not desirable.

(Basic Compound)

Specific examples of the basic compound used under the present invention include sodium hydroxide, potassium hydroxide, and other alkali metal hydroxides, as well as methyl amine, ethyl amine, monoethanol amine, N,N-dimethyl ethanol amine, N,N-diethyl ethanol amine, N,N-dibutyl ethanol amine, diethanol amine, N-methyl diethanol amine, triethanol amine, morpholine, N-methyl morpholine, N-ethyl morpholine, and other organic basic compounds. Any of the forgoing may be used alone or two or more types may be combined.

(Aqueous Medium)

The aqueous medium used in the aqueous inkjet ink composition proposed by the present invention may be aqueous medium constituted by water and water-soluble organic solvent.

For the aforementioned water, ion-exchanged water from which metal ions and the like have been removed, or distilled water, is preferred.

Also, better inkjet printability in terms of storage stability, discharge stability, and flying property of ink, etc., may be achieved when water-soluble organic solvent is contained. Such water-soluble organic solvent may be, for example, monoalcohols, polyalcohols, lower alkyl ethers of polyalcohols, ketones, ethers, esters, nitrogen-containing compounds, etc. Any of the forgoing may be used alone or two or more types may be combined.

Specific examples of the aforementioned monoalcohols include methanol, ethanol, n-propanol, n-butanol, n-pentanol, n-hexanol, n-heptanol, n-octanol, n-nonyl alcohol, n-decanol and isomers thereof, cyclopentanol, and cylohexanol, of which alcohols whose alkyl group has 1 to 6 carbon atoms are preferred.

Specific examples of the aforementioned polyalcohols include ethylene glycol, propylene glycol, 1,3-butylene glycol, 1,4-butylene glycol, 1,2-pentane diol, 1,5-pentane diol, neopentyl glycol, 1,2-hexane diol, 1,6-hexane diol, 1,2-cyclohexane diol, heptane diol, 1,8-octane diol, 1,9-nonane diol, 1,10-decane diol, glycerin, pentaerythritol, diethylene glycol, dipropylene glycol, triethylene glycol, tetraethylene glycol, polyethylene glycol, polypropylene glycol, thiodiglycol, etc.

Specific examples of the aforementioned lower alkyl ethers of polyalcohols include ethylene glycol monomethyl ether, ethylene glycol dimetyl ether, ethylene glycol monoethyl ether, ethylene glycol diethyl ether, ethylene glycol monopropyl ether, ethylene glycol isopropyl ether, ethylene glycol monobutyl ether, ethylene glycol isobutyl ether, propylene glycol monomethyl ether, propylene glycol monoethyl ether, propylene glycol monopropyl ether, propylene glycol monobutyl ether, diethylene glycol monomethyl ether, diethylene glycol monoethyl ether, dipropylene glycol mono-n-propyl ether, dipropylene glycol mono-n-butyl ether, etc.

Specific examples of the aforementioned ketones include acetone, methyl ethyl ketone, methyl butyl ketone, methyl isobutyl ketone, diisopropyl ketone, cyclopentanone, cyclohexanone, etc.

Specific examples of the aforementioned ethers include isopropyl ether, n-butyl ether, tetrahydrofuran, tetrahydropyran, 1,4-dioxane, etc.

The aforementioned esters include propylene carbonate, methyl acetate, ethyl acetate, propyl acetate, isopropyl acetate, butyl acetate, isobutyl acetate, amyl acetate, ethyl lactate, ethyl butyrate, dibutyl phthalate, and dioctyl phthalate, as well as ε-caprolactone, ε-caprolactam and other cyclic esters, etc.

The aforementioned nitrogen-containing compound include urea, pyrrolidone, N-methyl-2-pyrrolidone, octyl pyrrolidone, etc.

The content of the aforementioned water-soluble organic solvent is not limited in any way, but preferably it is 15 to 40 percent by mass in the aqueous inkjet ink composition.

(Surface Active Agent)

The surface active agent used under the present invention is a compound having an acetylene diol skeleton. Examples of such surface active agent include the Surfynol 104 series manufactured by Air Products. More specifically, Surfynol 104E, Surfynol 104H, Surfynol 104A, Surfynol 104BC, Surfynol 104DPM, Surfynol 104PA, Surfynol 104PG-50, Surfynol 420 and Surfynol 440, as well as Olfine E1004, Olfine E1010, Olfine E1020, Olfine PD-001, Olfine PD-002W, Olfine PD-004, Olfine PD-005, Olfine EXP. 4001, Olfine EXP. 4200, Olfine EXP. 4123, and Olfine EXP. 4300 manufactured by Nissin Chemical Industry, etc., can be used. Any of the foregoing may be used alone or two or more types may be combined.

The content of the aforementioned surface active agent is preferably 0.1 to 10 percent by mass, or more preferably 0.1 to 5 percent by mass, in the aqueous inkjet ink composition.

(Additives)

In addition, the aqueous inkjet ink composition proposed by the present invention can have any known pigment dispersion agent, antifungal agent, anti-corrosion agent, thickener, antioxidant, UV absorbent, storability improving agent, defoaming agent, pH adjusting agent, or other additive added to it.

(Method for Manufacturing Aqueous Inkjet Ink Composition)

The methods for manufacturing the aqueous inkjet ink composition proposed by the present invention using the above constituents, include the following:

(1) A method whereby the pigment, aqueous resin varnish produced by dissolving the alkali-soluble resin in water in the presence of the basic compound, and pigment dispersion agent, etc., as necessary, are mixed, after which any of various dispersion machines such as a ball mill, attritor, roll mill, sand mill, agitator mill, etc., is used to disperse the pigment, and then the remaining materials are added to prepare the aqueous inkjet ink composition (hereinafter referred to as "Manufacturing Method 1"); and

(2) A method whereby, after the pigment has been dispersed according to the aforementioned method, the acid precipitation method, ion exchange means described in Republication of International Patent Laid-open No. WO 2005/116147, or other means is used to obtain resin-coated pigment constituted by the alkali-soluble resin precipitated on the surface of the pigment, after which the resin-coated pigment thus obtained is neutralized by the basic compound and redispersed in water using any of various dispersers (such as a high-speed agitation apparatus, etc.), and then the remaining materials are added to prepare the aqueous inkjet ink composition (hereinafter referred to as "Manufacturing Method 2").

Of the two, Manufacturing Method 2 is preferred as it achieves better storage stability of the aqueous inkjet ink composition.

The initial viscosity of the aqueous inkjet ink composition proposed by the present invention, obtained as above, is 2.0 to 10.0 mPa•s, or preferably 3.0 to 7.0 mPa•s.

(Printing Method)

Next, the printing method using the aqueous inkjet ink composition proposed by the present invention is explained.

As for the printing media for the aqueous inkjet ink composition proposed by the present invention, art paper, dedicated inkjet paper, inkjet glossy paper or other coated paper, polyvinyl chloride sheets or other plastic base material, as well as standard paper, offset printing paper or other uncoated paper, can be utilized.

Then, for example, the aforementioned aqueous inkjet ink composition proposed by the present invention is stored in an ink cartridge and the ink cartridge is set in an inkjet recording apparatus adopting the single path method, etc., and then the ink composition is injected from a nozzle onto any of the aforementioned base materials for printing, to perform inkjet printing.

**Examples**

The present invention is explained in greater detail below by citing examples; it should be noted, however, that the present invention is not limited in any way to these examples. Unless otherwise specified, "%" indicates "percent by mass."

<Aqueous Resin Varnish>

20 parts by mass of acrylic acid/n-butyl acrylate/benzyl methacrylate/styrene copolymer of 40°C in glass transition temperature, 30,000 in weight-average molecular weight, and 185 mg KOH/g in acid value, was dissolved in a mixed solution constituted by 2.5 parts by mass of potassium hydroxide and 77.5 parts by mass of water, to obtain aqueous resin varnish of 20% in solid content.

<Preparation of Aqueous Black Ink Base>

By adding and mixing 64.3 parts by mass of water into 23.7 parts by mass of the aforementioned aqueous resin varnish, resin varnish for dispersing pigment was prepared. 12 parts by mass of carbon black (product name: Printex 90, manufactured by Degussa) was added further to this varnish and mixed under agitation, after which the mixture was kneaded in a wet circulation mill to prepare aqueous black ink base.

<Preparation of Aqueous Yellow Ink Base>

By adding and mixing 64.3 parts by mass of water into 23.7 parts by mass of the aforementioned aqueous resin varnish, resin varnish for dispersing pigment was prepared. 12 parts by mass of yellow pigment (product name: Novoperm Yellow 4G01, manufactured by Clariant) was added further to this varnish and mixed under agitation, after which the mixture was kneaded in a wet circulation mill to prepare aqueous yellow ink base.

<Preparation of Aqueous Magenta Ink Base>

By adding and mixing 64.3 parts by mass of water into 23.7 parts by mass of the aforementioned aqueous resin varnish, resin varnish for dispersing pigment was prepared. 12 parts by mass of magenta pigment (product name:

Inkjet Magenta E5B02, manufactured by Clariant) was added further to this varnish and mixed under agitation, after which the mixture was kneaded in a wet circulation mill to prepare aqueous magenta ink base.

<Preparation of Aqueous Cyan Ink Base>

By adding and mixing 64.3 parts by mass of water into 23.7 parts by mass of the aforementioned aqueous resin varnish, resin varnish for dispersing pigment was prepared. 12 parts by mass of cyan pigment (product name: Heliogen Blue L7101F, manufactured by BASF) was added further to this varnish and mixed under agitation, after which the mixture was kneaded in a wet circulation mill to prepare aqueous cyan ink base.

<Wax Emulsion>

AQUACER 531 (solid content 45%, nonionic emulsification-modified paraffin wax, average grain size 160 nm, manufactured by BYK Japan)
AQUACER 539 (solid content 35%, nonionic emulsification-modified paraffin wax, average grain size 50 nm, manufactured by BYK Japan)

<Surface Active Agent>

Surfynol 104PG50 (solid content 50%, acetylene diol surface active agent, manufactured by Air Products)
Olefine E1004 (solid content 100%, ethylene oxide adduct of acetylene diol surface active agent, manufactured by Nissin Chemical Industry)
BYK-347 (solid content 100%, polyether-modified siloxane surface active agent, manufactured by BYK Japan)

<Aqueous Inkjet Ink Compositions of Examples 1 to 9 and Comparative Examples 1 to 3>

The aforementioned aqueous ink bases of respective colors, wax emulsions, surface active agents, propylene glycol, and water, were mixed under agitation to achieve the ratios by mass in Table 1, to obtain the aqueous inkjet ink compositions of Examples 1 to 9 and Comparative Examples 1 to 3.

<Printing Evaluations of Aqueous Inkjet Ink Compositions>

Evaluations were made according to the evaluation methods below, the results of which are shown in Table 1.

(Discharge Stability)

The aqueous inkjet ink compositions of Examples 1 to 9 and Comparative Examples 1 to 3 were filled in a cartridge of an evaluation printer carrying a head manufactured by Epson, and OK top coated paper (manufactured by Oji Paper) was printed on, to evaluate discharge stability.
Evaluation criteria

○: Discharged stably and printing was not disturbed.
Δ: Discharged in a manner causing slight disturbance in printing.
x: Not discharged stably and printing was disturbed.

(Drying Property)

The aqueous inkjet ink compositions of Examples 1 to 9 and Comparative Examples 1 to 3 were filled in a cartridge of an evaluation printer carrying a head manufactured by Epson, and OK top coated paper (manufactured by Oji Paper) was printed, after which the printed product was let stand for 5 minutes at 23°C to dry the ink and then the printed area was rubbed with a cotton-tipped swab, to evaluate drying property.
Evaluation criteria

○: Ink did not attach at all to the cotton-tipped swab.
Δ: A small amount of ink attached to the cotton-tipped swab.
✕: A large amount of ink attached to the cotton-tipped swab.

(Rub Fastness)

The aqueous inkjet ink compositions of Examples 1 to 9 and Comparative Examples I to 3 were filled in a cartridge of an evaluation printer carrying a head manufactured by Epson, and OK top coated paper (manufactured by Oji Paper) was printed on, after which each printed product was cut to 2.5 cm x 25 cm in size and then rubbed 20 times each using a Gakushin-type friction resistance tester under a 200-gram load against contact paper which is identical [as paper] to the paper that has been printed on, to evaluate rub fastness based on peeling of the sample paper at the surface where rubbed, as well as smudging of the contact paper.

Evaluation criteria

○: The sample paper did not peel at the surface where rubbed, and the contact paper was not smudged.
Δ: The sample paper did not peel at the surface where rubbed, but the contact paper was slightly smudged.
×: The sample paper peeled at the surface where rubbed, and the contact paper was smudged.

(Storage Stability of Aqueous Inkjet Ink Composition)

The aqueous inkjet compositions of Examples 1 to 9 and Comparative Examples 1 to 3 were each taken into a glass vial and measured for viscosity at 25°C using a viscometer (Model RE100L manufactured by Toki Sangyo). Thereafter, the vials were sealed and stored for 1 month at 60°C, after which the viscosity (25°C) after storage was measured using the viscometer. The stability over time was evaluated based on the rate of change in viscosity (Viscosity after 1 month at 60°C - Viscosity before storage / Viscosity before storage).

Evaluation criteria
○: The rate of change in viscosity was less than 5%.
Δ: The rate of change in viscosity was 5% or more, but less than 10%. ×: The rate of change in viscosity was 10% or more, but less than 30%.

[Table 1]

| | | Examples | | | | | | | | | Comparative Examples | | |
|---|---|---|---|---|---|---|---|---|---|---|---|---|---|
| | | 1 | 2 | 3 | 4 | 5 | 6 | 7 | 8 | 9 | 1 | 2 | 3 |
| Black base ink | | 33.3 | | | | 33.3 | 33.3 | 33.3 | 33.3 | 33.3 | 33.3 | 33.3 | 33.3 |
| Yellow base ink | | | 33.3 | | | | | | | | | | |
| Magenta base ink | | | | 33.3 | | | | | | | | | |
| Cyan base ink | | | | | 33.3 3 | | | | | | | | |
| Wax emulsion | AOUACER531 | 3.0 | 3.0 | 3.0 | 3.0 | 3.0 | 40 | 4.0 | 1.0 | 5.0 | 10.0 | | 30 |
| | AQUACER539 | | | | | | | | | | | 4.0 | |
| Surface active agent | Surfynol 104PG50 | 2.0 | 2.0 | 2.0 | 2.0 | | 2.0 | 2.0 | 2.0 | 2.0 | 2.0 | 20 | |
| | Olfine E1004 | | | | | 1.0 | | | | | | | |
| | BYK-347 | | | | | | | | | | | | 1.0 |
| Aqueous medium | Propylene glycol | 25.0 | 28.0 | 27.0 | 30.0 | 26.0 | 20.0 | 26.0 | 27.0 | 23.0 | 20.0 | 25.0 | 25.0 |
| | Water | 36.7 | 33.7 | 34.7 | 31.7 | 36.7 | 40.7 | 34.7 | 36.7 | 36.7 | 34.7 | 35.7 | 37.7 |
| Total | | 100.0 | 100.0 | 100.0 | 100.0 | 100.0 | 100.0 | 100.0 | 100.0 | 100.0 | 100.0 | 100.0 | 100.0 |
| Viscosity (mPa•s) | | 5.0 | 5.0 | 5.0 | 5.0 | 5.0 | 3.0 | 6.0 | 5.0 | 5.0 | 7.0 | 5.0 | 5.0 |
| Surface tension (dyn) | | 28.0 | 28.0 | 28.0 | 28.0 | 29.0 | 28.0 | 28.0 | 28.0 | 28.0 | 28.0 | 28.0 | 26.0 |
| Storage stability | | ○ | ○ | ○ | ○ | ○ | ○ | ○ | ○ | ○ | △ | ○ | ○ |
| Discharge stability | | ○ | ○ | ○ | ○ | ○ | ○ | ○ | ○ | ○ | × | ○ | × |
| Drying property | | ○ | ○ | ○ | ○ | ○ | ○ | ○ | ○ | ○ | ○ | ○ | △ |
| Scratch resistance | | ○ | ○ | ○ | ○ | ○ | ○ | ○ | ○ | ○ | ○ | × | ○ |

Examples 1 to 9 show that the ink compositions conforming to the present invention have low initial viscosity, appropriate surface tension, as well as excellent storage stability, discharge stability, drying property, and rub fastness.

These properties are not affected by the type of pigment according to the results of Examples 1 to 4, and remain stable even when the type and quantity of acetylene diol surface active agent are changed according to the results of Examples 1 and 5.

In addition, the results of Examples 1, 6, and 9 show that the aqueous inkjet ink compositions conforming to the present invention have good properties and that these properties are not affected by the concentration of wax emulsion, but remain stable instead, so long as the quantity of wax emulsion changes within the specified range.

According to the result of Comparative Example 1, on the other hand, the excessive quantity of wax emulsion causes the storage stability and discharge stability to worsen.

Also, as shown in Comparative Example 2, use of wax emulsion whose grain size is smaller than the specified range causes the rub fastness to worsen.

The result of Comparative Example 3 shows that use of surface active agent which is not based on acetylene diol causes both the discharge stability and drying property to worsen, although the storage stability of inkjet ink composition and rub fastness of the printed product are good.

## Claims

1. An aqueous inkjet ink composition containing a pigment, an alkali-soluble resin, a wax emulsion, a basic compound, an aqueous medium, and a surface active agent, wherein an average grain size of the wax emulsion is 150 to 200 nm, a solid content of the wax emulsion in the aqueous inkjet ink composition is 0.5 to 4 percent by mass, and the surface active agent is acetylene diol surface active agent.

2. An aqueous inkjet composition according to Claim 1, wherein a content of the pigment in the aqueous inkjet ink composition is 2 to 6 percent by mass.

3. An aqueous inkjet composition according to Claim 1 or 2, wherein the wax emulsion is nonionic polyalkylene wax emulsion.

4. An aqueous inkjet composition according to any one of Claims 1 to 3, wherein a content of the surface active agent in the water-base inkjet ink composition is 0.1 to 5 percent by mass.

## EP 3 098 272 A1

### INTERNATIONAL SEARCH REPORT

| International application No. |
|---|
| PCT/JP2015/051618 |

**A. CLASSIFICATION OF SUBJECT MATTER**
*C09D11/38*(2014.01)i, *B41J2/01*(2006.01)i, *B41M5/00*(2006.01)i

According to International Patent Classification (IPC) or to both national classification and IPC

**B. FIELDS SEARCHED**

Minimum documentation searched (classification system followed by classification symbols)
C09D11/38, B41J2/01, B41M5/00

Documentation searched other than minimum documentation to the extent that such documents are included in the fields searched
Jitsuyo Shinan Koho          1922-1996     Jitsuyo Shinan Toroku Koho     1996-2015
Kokai Jitsuyo Shinan Koho    1971-2015     Toroku Jitsuyo Shinan Koho     1994-2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2013-230578 A  (Seiko Epson Corp.),<br>14 November 2013 (14.11.2013),<br>claims; paragraphs [0100], [0104], [0105] to<br>[0111], [0130]; examples; particularly,<br>paragraphs [0151] to [0153]<br>& US 2013/0286069 A1 | 1-4<br>3 |
| X<br>Y | JP 2013-49786 A  (Seiko Epson Corp.),<br>14 March 2013 (14.03.2013),<br>claims; paragraphs [0017], [0019], [0034],<br>[0066]; examples; particularly, example 7<br>(Family: none) | 1-2,4<br>3 |

|☒| Further documents are listed in the continuation of Box C. | |☐| See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 April 2015 (17.04.15) | Date of mailing of the international search report<br>28 April 2015 (28.04.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br><br>Telephone No. |

Form PCT/ISA/210 (second sheet) (July 2009)

**INTERNATIONAL SEARCH REPORT**

International application No.

PCT/JP2015/051618

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2013-170198 A  (Sakata INX Corp.),<br>02 September 2013 (02.09.2013),<br>claims; paragraphs [0032] to [0033], [0046];<br>examples<br>(Family: none) | 1,3-4<br>3<br>2 |
| A | JP 2003-261805 A  (Seiko Epson Corp.),<br>19 September 2003 (19.09.2003),<br>claims; examples<br>(Family: none) | 1-4 |
| A | JP 2004-261974 A  (Seiko Epson Corp.),<br>24 September 2004 (24.09.2004),<br>claims; examples<br>& US 2006/0264533 A1     & WO 2004/071782 A1<br>& EP 1602505 A1          & EP 2305484 A1<br>& CN 1774346 A           & AT 533637 T | 1-4 |
| A | JP 2013-129711 A  (Seiko Epson Corp.),<br>04 July 2013 (04.07.2013),<br>claims; examples<br>(Family: none) | 1-4 |
| A | WO 2011/93486 A1  (DIC Corp.),<br>04 August 2011 (04.08.2011),<br>claims; examples<br>& JP 5146611 B           & US 2013/0053485 A1<br>& EP 2532718 A1          & CA 2788641 A<br>& CN 102741367 A        & TW 201202357 A | 1-4 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011026545 A
- JP 2011094082 A
- JP 2011074336 A
- WO 2005116147 A